# EUROPEAN PATENT SPECIFICATION

(11) **EP 4 175 054 B1**
(45) Date of publication and mention of the grant of the patent: **16.07.2025**
(21) Application number: 21886872.7
(22) Date of filing: 29.10.2021
(51) Int. Cl.: H01M 4/04, H01M 50/572, H01M 50/531, H01M 50/543, H01M 10/04, H01M 50/534, H01M 50/586, H01M 50/591

(54) **ELECTRODE HAVING EXCELLENT WELDABILITY BETWEEN ELECTRODE LEAD AND ELECTRODE TAB AND METHOD OF MANUFACTURING THE SAME**
ELEKTRODE MIT HERVORRAGENDER SCHWEISSBARKEIT ZWISCHEN ELEKTRODENLEITUNG UND ELEKTRODENLASCHE UND HERSTELLUNGSVERFAHREN DAFÜR
ÉLECTRODE AYANT UNE EXCELLENTE SOUDABILITÉ ENTRE UN FIL D'ÉLECTRODE ET UNE LANGUETTE D'ÉLECTRODE ET SON PROCÉDÉ DE FABRICATION

(30) Priority: 02.11.2020 KR 20200144304
(43) Date of publication of application: 03.05.2023
(73) Proprietor: LG Energy Solution, Ltd., Seoul 07335 (KR)
(72) Inventor: YUN, Hyun Woong, Daejeon 34122 (KR)
(74) Representative: Plasseraud IP
(86) International application number: PCT/KR2021/015383
(87) International publication number: WO 2022/092878

(56) References cited:
- EP-A1- 3 588 620
- JP-A- 2016 219 255
- KR-A- 20090 132 925
- KR-A- 20090 132 925
- KR-A- 20200 090 496
- KR-B1- 100 868 256
- KR-B1- 100 868 256
- US-A1- 2015 125 732
- US-A1- 2015 125 732
- US-A1- 2016 149 221

## Description

### [Technical Field]

This application claims the benefit of priority to Korean Patent Application No. 2020-0144304 filed on November 2, 2020.

The present invention relates to an electrode having excellent weldability between an electrode lead and an electrode tab and a method of manufacturing the same. More particularly, the present invention relates to an electrode including an insulating layer on an electrode tab capable of reducing a welding defect rate between the electrode tab and an electrode lead and simplifying a process and a method of manufacturing the same.

### [Background Art]

A lithium secondary battery, which is capable of being charged and discharged, has attracted attention as a power source for devices that require high output and large capacity, including an electric vehicle (EV), a hybrid electric vehicle (HEV), and a plug-in hybrid electric vehicle (Plug-In HEV), which have been proposed to solve problems, such as air pollution, caused by existing gasoline and diesel vehicles using fossil fuels.

In such a device, a medium- or large-sized battery module including a plurality of battery cells electrically connected to each other is used in order to provide high output and large capacity.

It is preferable for the medium- or large-sized battery module to be manufactured so as to have as small a size and weight as possible, and therefore a prismatic battery or a pouch-shaped battery, which can be stacked with high integration and has a small ratio of weight to capacity, is mainly used as a battery cell (unit cell) of the medium- or large-sized battery module. In recent years, a pouch-shaped battery configured to have a structure in which a stacked type or stack/folded type electrode is mounted in a pouch-shaped battery case made of an aluminum laminate sheet has attracted considerable attention for reasons of low manufacturing cost, light weight, and easy deformation thereof, and the usage of the pouch-shaped battery has gradually increased.

One of the principal research projects for secondary batteries is to improve the safety of the secondary batteries. In general, a lithium secondary battery may explode due to high temperature and high pressure in the secondary battery which may be caused by an abnormal state of the secondary battery, such as short circuit in the secondary battery, overcharge of the secondary battery with higher than allowed current or voltage, exposure of the secondary battery to high temperature, or external impact applied to the secondary battery, such as dropping of the secondary battery. As one of such cases, there is a possibility of short circuit occurring in the secondary battery when the secondary battery is dropped or external force is applied to the secondary battery.

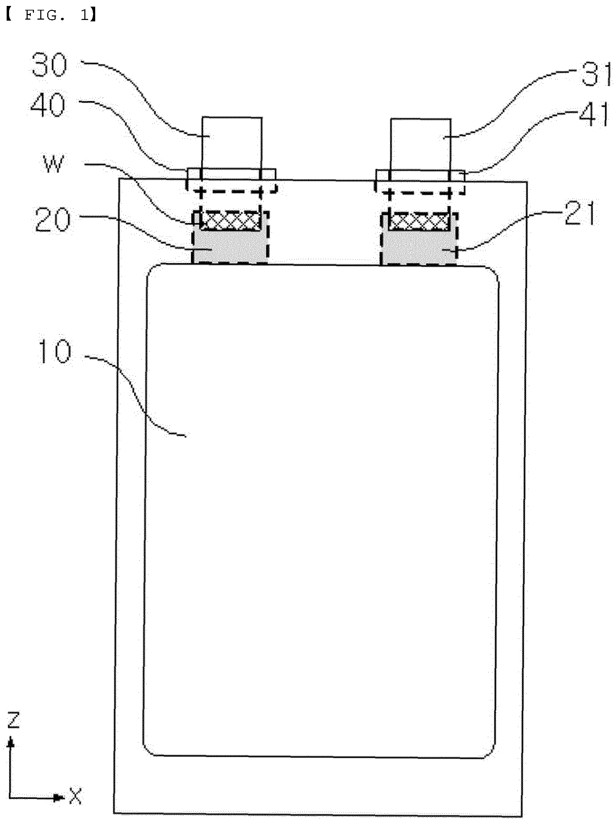

A general structure of a conventional pouch-shaped secondary battery including a stacked type electrode is shown in FIG. 1.

Referring to FIG. 1, the conventional pouch-shaped secondary battery includes an electrode 10, electrode tabs 20 and 21 extending from the electrode 10, electrode leads 30 and 31 welded to electrode tabs 20 and 21, respectively, and a battery case configured to receive the electrode 10.

In the electrode 10, a positive electrode and a negative electrode may be sequentially stacked in the state in which a separator is interposed therebetween. The electrode 10 may be a jelly-roll type (wound type) electrode, configured to have a structure in which a long sheet type positive electrode and a long sheet type negative electrode are wound in the state in which a separator is interposed therebetween, a stacked type electrode, configured to have a structure in which a plurality of positive electrodes having a predetermined size and a plurality of negative electrodes cut to a predetermined size are sequentially stacked in the state in which separators are interposed therebetween, or a stacked and folded type electrode, configured to have a structure in which bi-cells or full cells, in each of which a predetermined number of positive electrodes and a predetermined number of negative electrodes stacked in the state in which separators are interposed therebetween, are wound.

The electrode tabs 20 and 21 extend from electrode plates of the electrode 10. The electrode leads 30 and 31 are connected to a plurality of electrode tabs 20 and 21 extending from the electrode plates, and a portion of each of the electrode leads may be exposed outwards from the battery case.

A portion of each of the electrode leads 30 and 31 is electrically connected to a corresponding one of the electrode tabs 20 and 21. At this time, joining therebetween is performed by welding to form a junction w. Joining may be performed by resistance welding, ultrasonic welding, laser welding, or riveting. In addition, protective films 40 and 41 may be interposed between the electrode leads and the battery case in order to improve sealability with the battery case and to secure electrical insulation.

When the battery drops or physical external force is applied to the upper end of the battery, whereby the electrode tab comes into contact with the upper end of the electrode, short circuit occurs in the battery. In many cases, short circuit occurs due to contact between the electrode tab and a negative electrode current collector or between the electrode tab and a negative electrode active material.

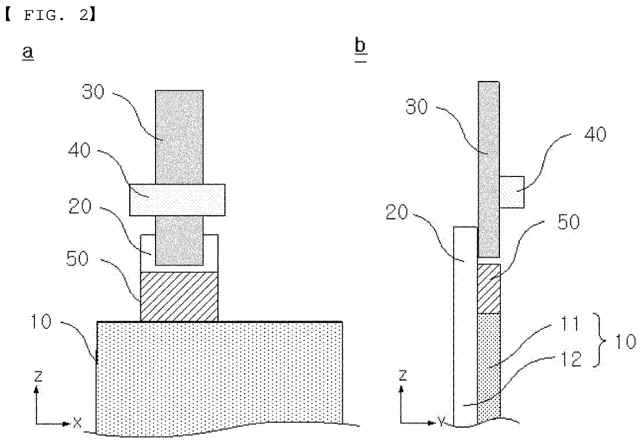

A front sectional structure and a side sectional structure of an electrode tab-electrode lead coupling portion having a conventional insulating layer are shown in FIG. 2.

Referring to Fig. 2, an insulating layer 50 may be provided at a portion of an electrode tab 20 that is joined to an electrode lead 30 in order to prevent short circuit. In this method, however, the force of joining between the electrode tab and the electrode lead is low and an electrode defect rate is increased due to the insulating layer, which is non-uniformly formed, a joining process is complicated, and it is not possible to completely prevent short circuit in the battery due to defects of the insulating layer. Consequently, there is a need for improvement.

Patent Document 1 relates to a positive electrode including an insulating layer formed on a positive electrode tab, wherein a portion of a positive electrode tab protruding from a positive electrode current collector is coated with an insulating material, thereby preventing internal short circuit when a cell is deformed or when an electrode is stacked as the result of the edge of the electrode is sharpened when the electrode is cut during manufacture of a battery or preventing physical short circuit between a positive electrode and a negative electrode due to contraction of a separator in a hightemperature atmosphere.

Patent Document 2 relates to a secondary battery including a sealing member disposed at a coupling portion between an electrode tab and an electrode lead, wherein the secondary battery includes an electrode having a stacked structure including a positive electrode, a negative electrode, and a separator interposed between the positive electrode and the negative electrode, and an electrode lead electrically connected to electrode tabs of the electrode, the electrode lead extending outwards from a battery case, the electrode tab and the electrode lead are electrically connected to each other by ultrasonic welding to form a coupling portion therebetween, and the outer surface of the coupling portion is wrapped by a thermally fused sealing member. The force of sealing at the connection portion between the electrode tab and the electrode lead is increased using the sealing member, whereby it is possible to prevent short circuit.

Patent Document 1 and Patent Document 2 provide the construction of the insulating layer configured to prevent short circuit, but do not disclose the construction capable of simplifying the process of forming the insulating layer on the electrode tab by coating and reducing a rate of welding defect between the electrode tab and the electrode lead.

### (Prior Art Documents)

(Patent Document 1) Korean Registered Patent Publication No. 10-1586530 (2016.01.12)
(Patent Document 2) Korean Registered Patent Publication No. 10-1792605 (2017.10.26)

EP 3 588 620 A1, US 2016/149221 A1, and KR 2009 0132925 A disclose an electrode tab and the insulation layer.

### [Disclosure]

### [Technical Problem]

The present invention has been made in view of the above problems, and it is an object of the present invention to provide an electrode having excellent weldability between an electrode tab coated with an insulating layer and an electrode lead, thereby reducing a defect rate, and a method of manufacturing the same.

It is another object of the present invention to provide an electrode capable of forming an insulating layer through simple coating while expecting a sufficient insulation effect and a method of manufacturing the same.

### [Technical Solution]

In order to accomplish the above objects, an electrode according to the present invention is defined in the appended set of claims, the electrode includes an electrode current collector (112) coated with an electrode active material (111), an electrode tab (120) protruding from the electrode current collector (112), and an insulating layer (150) formed on the electrode tab (120) by coating, wherein the other surface of the electrode tab (120) having the insulating layer (150) formed thereon by coating is welded to an electrode lead (130).

In the electrode according to the present invention, the electrode tab (120) may be a non-coated portion including no electrode active material (111) layer.

In the electrode according to the present invention, the insulating layer (150) may be formed, by coating, on a portion or the entirety of the total length of the electrode tab (120) in a protruding direction of the electrode tab (120).

In the electrode according to the present invention, the insulating layer (150) may be formed by coating so as to have a width equal to the width of the electrode tab perpendicular to the protruding direction of the electrode tab (120).

In the electrode according to the present invention, the electrode tab (120) may include a portion of the electrode active material (111) layer.

In the electrode according to the present invention, the insulating layer (150) may include a portion or the entirety of the electrode active material (111), and may be formed, by coating, on a portion or the entirety of the total length of the electrode tab (120) in the protruding direction of the electrode tab (120).

In the electrode according to the present invention, the insulating layer (150) may be formed by coating so as to have a width equal to the width of the electrode tab (120) perpendicular to the protruding direction of the electrode tab (120).

In addition, the present invention provides a secondary battery including the electrode as defined in the appended set of claims.

Also, in the present invention, the secondary battery may be a cylindrical, prismatic, or pouch-shaped secondary battery.

The present invention provides an electrode manufacturing method as defined in the appended set of claims, the method includes a first step of forming, by coating, an insulating layer on a first side surface of an electrode tab formed at an electrode current collector so as to protrude therefrom and a second step of welding other side surface of the electrode tab opposite the first side surface on which the insulating layer is formed by coating and an electrode lead to each other.

Also, in the electrode manufacturing method according to the present invention, in the first step, the insulating layer may be formed, by coating, on the entirety of the first side surface of the electrode tab.

In addition, the electrode manufacturing method according to the present invention may further include a step of forming, by coating, the insulating layer on a pair of second side surfaces and a third side surface of the electrode tab in the first step.

In the present invention, one or more constructions that do not conflict with each other may be selected and combined from among the above constructions.

### [Advantageous Effects]

An electrode according to the present invention and a method of manufacturing the same have an advantage in that the other surface of an electrode tab having an insulating layer formed thereon by coating is welded to an electrode lead, whereby no insulating layer is included in the surface of the electrode tab that is welded, and therefore weldability with the electrode lead is improved, thus reducing a welding defect rate.

In addition, the electrode according to the present invention and the method of manufacturing the same have a merit in that, since the insulating layer is formed, by coating, on the surface the electrode lead of opposite the surface of the electrode tab to which the electrode lead is welded, a coating process and a welding process are simplified.

In addition, the electrode according to the present invention and the method of manufacturing the same have an advantage in that a process of manufacturing the electrode including the insulating layer formed on one surface thereof can be greatly simplified, whereby it is possible to reduce manufacturing cost.

### [Description of Drawings]

FIG. 1 is a schematic view of a conventional secondary battery.
FIG. 2 is a front view and a side sectional view of an electrode tab-electrode lead coupling portion having a conventional insulating layer.
FIG. 3 is a perspective view of an electrode having an electrode tab according to a first preferred embodiment of the present invention protruding therefrom.
FIG. 4 is a front view and a side sectional view of an electrode tab-electrode lead coupling portion including an insulating layer according to a first preferred embodiment of the present invention.
FIG. 5 is a front view and a side sectional view of an electrode tab-electrode lead coupling portion including an insulating layer according to a second preferred embodiment of the present invention.
FIG. 6 is a front view and a side sectional view of an electrode tab-electrode lead coupling portion including an insulating layer according to a third preferred embodiment of the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

In addition, a description to embody elements through limitation or addition may be applied to all inventions, unless particularly restricted, and does not limit a specific invention.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

A battery according to the present invention will be described with reference to the accompanying drawings.

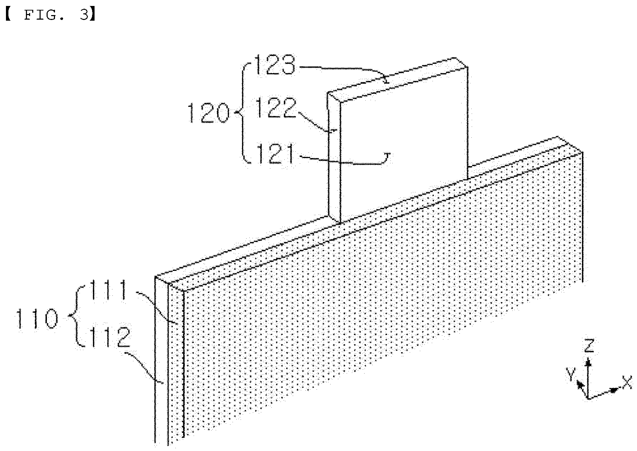

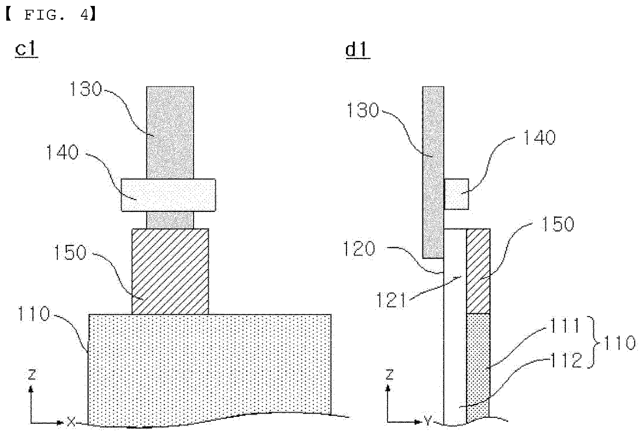

FIG. 3 is a perspective view of an electrode having an electrode tab according to a first preferred embodiment of the present invention protruding therefrom, and FIG. 4 is a front view and a side sectional view of an electrode tab-electrode lead coupling portion including an insulating layer according to a first preferred embodiment of the present invention.

When describing the electrode according to the first embodiment of the present invention with reference to FIGS. 3 and 4, an electrode 110 including an electrode current collector 112 and an electrode active material 111, an electrode tab 120 formed at one end of the electrode current collector 112 so as to protrude therefrom, an insulating layer 150 included in the electrode tab 120, and an electrode lead 130 coupled to the electrode tab 120 by welding are provided.

When first describing the electrode 110 in detail, the electrode 110 may be a positive electrode or a negative electrode.

The positive electrode may be formed by applying a positive electrode active material, as the electrode active material 111, to one surface or opposite surfaces of a positive electrode current collector, as the electrode current collector 112.

Here, the positive electrode current collector is manufactured so as to have a thickness of 3 to 500 µm.

In addition, the positive electrode current collector is not particularly restricted as long as the positive electrode current collector exhibits high conductivity while the positive electrode current collector does not induce any chemical change in a battery to which the positive electrode current collector is applied. For example, the positive electrode current collector may be made of stainless steel, aluminum, nickel, titanium, or sintered carbon. Alternatively, the positive electrode current collector may be made of aluminum or stainless steel, the surface of which is treated with carbon, nickel, titanium, or silver.

The current collector may have a micro-scale uneven pattern formed on the surface thereof so as to increase adhesive force of the positive electrode active material. The current collector may be configured in any of various forms, such as a film, a sheet, a foil, a net, a porous body, a foam body, and a non-woven fabric body.

In addition, the positive electrode active material may be a lithium-containing transition metal oxide or any one selected from among equivalents thereto. More specifically, the positive electrode active material may include a manganese-based spinel active material, a lithium metal oxide, or a mixture thereof. The lithium metal oxide may be selected from the group consisting of a lithium-manganese-based oxide, a lithium-nickel-manganese-based oxide, a lithium-manganese-cobalt-based oxide, and a lithium-nickel-manganese-cobalt-based oxide. More specifically, the lithium metal oxide may be LiCoO₂, LiNiO₂, LiMnO₂, LiMn₂O₄, Li(NiₐCo_{b}Mn_{c})O₂ (where 0<a<1, 0<b<1, 0<c<1, a+b+c=1), LiNi_{1-Y}Co_{Y}O₂, LiCo_{1-Y}Mn_{Y}O₂, LiNi_{1-Y}Mn_{Y}O₂ (where 0≤Y<1), Li(NiₐCo_{b}Mn_{c})O₄ (0 < a < 2, 0 < b < 2, 0 < c < 2, a+b+c=2), LiMn_{2-z}Ni_{z}O₄, or LiMn_{2-z}Co_{z}O₄ (where 0 < Z < 2) .

Also, a negative electrode current collector may be manufactured so as to have a thickness of 3 to 500 µm. The negative electrode current collector is not particularly restricted as long as the negative electrode current collector exhibits conductivity while the negative electrode current collector does not induce any chemical change in a battery to which the negative electrode current collector is applied. For example, the negative electrode current collector may be made of copper, stainless steel, aluminum, nickel, titanium, or sintered carbon. Alternatively, the negative electrode current collector may be made of copper or stainless steel, the surface of which is treated with carbon, nickel, titanium, or silver, or an aluminum-cadmium alloy. In addition, the negative electrode current collector may have a micro-scale uneven pattern formed on the surface thereof so as to increase binding force of a negative electrode active material, in the same manner as the positive electrode current collector. The negative electrode current collector may be configured in any of various forms, such as a film, a sheet, a foil, a net, a porous body, a foam body, and a non-woven fabric body.

As the material for the negative electrode, for example, there may be used carbon, such as a nongraphitizing carbon or a graphite-based carbon; a metal composite oxide, such as LiₓFe₂O₃ (0≤x≤1) , LiₓWO₂ (0≤x≤1), SnₓMe₁₋ₓMe'_{y}O_{z} (Me: Mn, Fe, Pb, Ge; Me' : Al, B, P, Si, Group 1, 2, and 3 elements of the periodic table, halogen; 0<x≤1; 1≤y≤3; 1≤z≤8) ; lithium metal; a lithium alloy; a silicon-based alloy; a tin-based alloy; a metal oxide, such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅; a conductive polymer, such as polyacetylene; or a Li-Co-Ni-based material.

Next, the electrode tab 120 will be described. The electrode tab 120 may be formed at the electrode current collector 112 so as to protrude and extend therefrom.

Also, in the present invention, the electrode tab 120 may be formed by notching a continuous electrode sheet configured such that one surface or opposite surfaces of the electrode current collector 112 are coated with the electrode active material 111 at unit electrode intervals using a press die.

Consequently, the electrode tab 120 extends from one side of the electrode current collector 112, and includes a pair of first side surfaces 121 opposite each other, corresponding to width direction (X-axis direction) surfaces, a pair of second side surfaces 122 opposite each other, corresponding to thickness direction (Y-axis direction) surfaces, and a third side surface 123 opposite the electrode current collector 112.

Here, the electrode tab 120 is a non-coated portion, to which the electrode active material 111 is not applied, and includes an insulating layer 150 formed by coating one of the pair of first side surfaces 121 with an insulating material. The other of the first side surfaces 121, on which no insulating layer 150 is formed, is coupled to the electrode lead 130.

Meanwhile, the insulating layer 150 may be formed by coating the first side surface 121 of the electrode tab 120 with an insulating material in a protruding direction (Z-axis direction) from the electrode current collector 112, and may be formed on a portion or the entirety of the length (Z-axis direction) of the first side surface 121. Since there are no strict limitations on a coated region when the first side surface 121 of the electrode tab 120 is coated with an insulating material, insulating material coating may be simply and easily performed.

In addition, it is preferable for the insulating layer 150 to be formed by coating so as to have a width equal to the width (X-axis direction) of the electrode tab 120 perpendicular to the protruding direction of the electrode tab 120. Since the electrode active material 111 is formed on the electrode current collector 112, from which the electrode tab 120 protrudes and extends, the entire width of the first side surface 121 of the electrode tab 120 extending from the electrode current collector 112 is coated with an insulating material, which is advantageous to preventing short circuit caused by the electrode active material 111.

Here, a dipping method, a dip coating method, a spray coating method, a spin coating method, a roll coating method, a die coating method, a roll coat method, a gravure printing method, or a bar coat method may be used as an insulating material coating method. However, the present invention is not limited thereto.

The insulating material may be polyethylene, polypropylene, polyether imide, polyacetal, polysulfone, polyether ether ketone, polyester, polyamide, an ethylene vinyl acetate copolymer, polystyrene, polytetrafluoroethylene, polysiloxane, polyimide, an arbitrary copolymer thereof, or an arbitrary mixture thereof. Thereamong, polyimide, which exhibits excellent electrical insulation and heat resistance, is particularly preferable. However, the insulating material is not limited to the above examples as long as the insulating material does not affect electrochemical reaction of a battery while exhibiting electrical insulation.

Depending on circumstances, an inorganic material may be further added to the polymer resin within a range within which the effect of the present invention is not damaged. SiO₂, TiO₂, Al₂O₃, ZrO₂, SnO₂, CeO₂, MgO, CaO, ZnO, Y₂O₃, Pb(Zr,Ti)O₃ (PZT), Pb₁₋ₓLaₓZr_{1-y}TiyO₃ (PLZT), PB (Mg₃Nb_{2/3}) O₃-PbTiO₃ (PMN-PT), BaTiO₃, hafnia (H_{f}O₂), SrTiO₃, and a mixture of two or more thereof may be mentioned as examples of the inorganic material.

In the present invention, the material for the electrode lead 130 is not particularly restricted as long as the electrode lead is made of a material capable of electrically connecting electrode tabs 120 to each other. Preferably, the electrode lead is a metal plate. A nickel plate, a copper plate plated with nickel, an aluminum plate, a copper plate, and an SUS plate may be mentioned as examples of the metal plate. However, the present invention is not limited thereto.

In the present invention, the electrode tab 120 and the electrode lead 130 may be joined to each other by welding. The electrode tab and the electrode lead are electrically connected to each other by ultrasonic welding. Coupling by ultrasonic welding is performed according to the principle by which high-frequency vibration generated by an ultrasonic wave of about 20 kHz is applied, and vibration energy is converted into thermal energy due to friction at the interface between the electrode tab and the electrode lead as the result of operation of a horn and an anvil, whereby welding is rapidly performed.

A method of manufacturing the electrode according to the first embodiment of the present invention having the construction described above may include a step of coating a first side surface of an electrode tab 120 formed at an electrode current collector 112 so as to protrude therefrom with an insulating material to form an insulating layer 150 and a step of welding the other surface of the electrode tab 120 opposite the first side surface on which the insulating layer 150 is formed and an electrode lead 130 to each other.

In the coating step to form the insulating layer, the insulating layer may be formed on a portion or the entirety of the first side surface of the electrode tab 120 by coating.

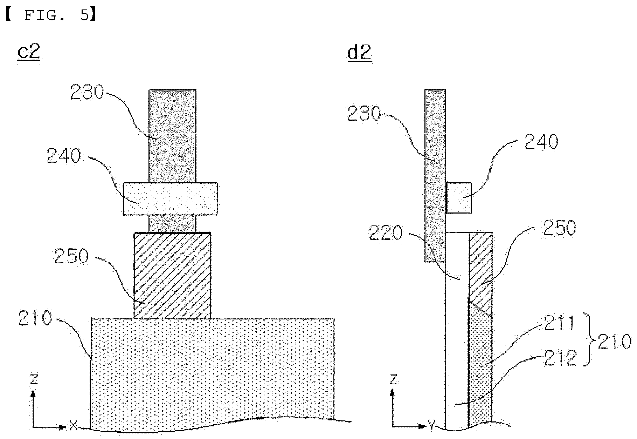

FIG. 5 is a front view and a side sectional view of an electrode tab-electrode lead coupling portion including an insulating layer according to a second preferred embodiment of the present invention.

The second embodiment of the present invention is identical to the first embodiment of the present invention described with reference to FIGS. 3 and 4 except that a portion of an electrode active material 211 is included in one surface of an electrode tab 220, and therefore only the electrode active material 211 included in the electrode tab 220 will be described hereinafter.

Referring to FIG. 5, an electrode active material may be formed on one surface of the electrode tab 220 in a protruding direction from one end of an electrode current collector 212 of the electrode according to the second embodiment of the present invention. The electrode active material formed on the electrode tab 220 may be formed as the result of an electrode active material 211 formed on the electrode current collector 212 extending to the electrode tab 220.

The insulating layer 250 may be formed in a protruding direction (Z-axis direction) of the electrode tab 220, including the entirety or a portion of the electrode active material formed on the electrode tab 220, by coating. In addition, it is preferable for the insulating layer 250 to be formed by coating so as to have a width (X-axis direction) equal to the width of the electrode tab 220. This is advantageous in preventing short circuit caused as the result of the electrode active material contacting another member. In addition, this is advantageous to delaying the progress of short circuit when a separator is contracted at high temperature.

A method of manufacturing the electrode according to the second embodiment of the present invention is identical to the method of manufacturing the electrode according to the first embodiment of the present invention described above except that the electrode active material is formed on the electrode tab 220, and therefore a detailed description thereof will be omitted.

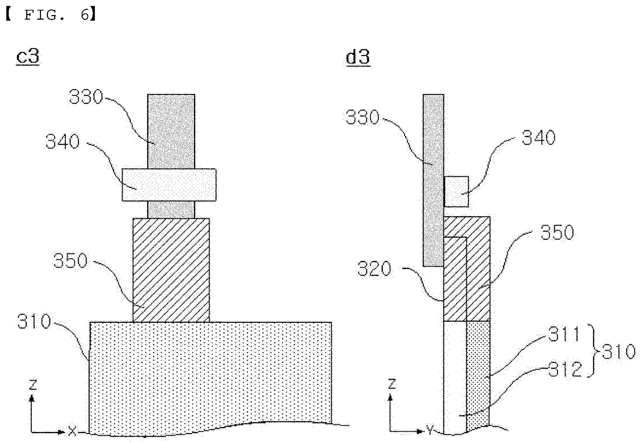

FIG. 6 is a front view and a side sectional view of an electrode tab-electrode lead coupling portion including an insulating layer according to a third preferred embodiment of the present invention.

The third embodiment of the present invention is identical to the first embodiment of the present invention described with reference to FIGS. 3 and 4 except that an insulating layer 350 is further formed on a second side surface and a third side surface of an electrode tab 320 by coating, and therefore only the insulating layer 350 formed on the second side surface and the third side surface of the electrode tab 320 by coating will be described hereinafter.

In the third embodiment of the present invention, the insulating layer 350 may be formed on a pair of second side surfaces and a third side surface of the electrode tab 320 by coating, in addition to one first side surface of the electrode tab. The insulating layer 350 may be formed on a portion or the entirety of each of the four side surfaces. The insulating layer 350 may be formed by coating in a protruding direction (Z-axis direction) of the electrode tab 320, and it is preferable for the insulating layer 350 to be formed by coating so as to have a width (X-axis direction) equal to the width of the electrode tab 320.

Among five side surfaces of the electrode tab 320 extending and protruding from an electrode current collector 312, the insulating layer is formed on the other four side surfaces, excluding the surface that is welded to an electrode lead 330, which is advantageous in preventing short circuit due to corrosion of the electrode tab 320.

A method of manufacturing the electrode according to the third embodiment of the present invention is identical to the method of manufacturing the electrode according to the first embodiment of the present invention described above except that the insulating layer is formed on a pair of second side surfaces and a third side surface of the electrode tab 320 by coating, in addition to the first side surface of the electrode tab, and therefore a detailed description thereof will be omitted.

The present invention may provide a secondary battery including the electrode described above. In general, for a lithium secondary battery, a negative electrode is manufactured so as to be larger than a positive electrode in consideration of a problem in that lithium ions are deposited on the negative electrode during charging and discharging. As a result, there is a high possibility of a positive electrode tab being brought into contact with a negative electrode (current collector or active material) of a power generating element first when external impact due to dropping is applied. In the case in which the positive electrode is smaller than the negative electrode, therefore, it is preferable to form an insulating layer on the positive electrode tab by coating. In the case in which the positive electrode and the negative electrode are the same size, on the other hand, the insulating layer may be formed on both the positive electrode tab and a negative electrode tab by coating.

Hereinafter, the present invention will be described in more detail with reference to the examples; however, the category of the present invention is not limited thereby.

### Example 1

LiNi_{0.8}Mn_{0.1}Co_{0.1}O₂ was used as a positive electrode active material, carbon black was used as a conductive agent, and polyvinylidene fluoride (PVdF) was used as a binder. A mixture of the positive electrode active material, the conductive agent, and the binder mixed in a weight ratio of 96:2:2 was added to NMP, as a solvent, to manufacture a positive electrode active material slurry.

The positive electrode active material slurry was applied to an aluminum current collector having a thickness of 30 µm at a loading amount of 4.01 mAh/cm² at each surface thereof, dried, and pressed to obtain a positive electrode.

The positive electrode was punched to a size of 40 mm x 55 mm such that no electrode layer reached a portion of an electrode tab, a non-coated region of a front surface of the electrode tab was painted with a PVdF solution (NMP solution, containing 7% of solid content) with a brush and dried at 80°C, and a rear surface of the electrode tab and an electrode lead were welded to each other (20 kHz, 0.5 sec ultrasonic welding).

### Example 2

Example 2 is identical to Example 1 except that a positive electrode was punched to a size of 40 mm x 55 mm such that an electrode layer reached a portion of an electrode tab, and a non-coated region of a front surface of the electrode tab and a region that an active material reached were painted with a PVdF solution with a brush.

### Example 3

Example 3 is identical to Example 1 except that a non-coated region of a front surface of an electrode tab and a side surface of the electrode tab were painted with a PVdF solution with a brush.

### Comparative Example 1

Comparative Example 1 is identical to Example 1 except that a rear surface of an electrode tab was not welded, a front surface of the electrode tab was painted with a PVdF solution with a brush and was dried, and the front surface of the electrode tab was welded.

### Comparative Example 2

Comparative Example 2 is identical to Example 1 except that a rear surface of an electrode tab was not welded, 3/4 or more of the area of the electrode tab was painted with a PVdF solution with a brush and was dried, and the front surface of the electrode tab was welded.

### Evaluation of welding performance

Welding was performed 10 times on each of Examples 1 to 3 and Comparative Examples 1 and 2, and the number of welding failures is shown in the following table.

In the present invention, failure of welding between an electrode tab and an electrode lead may be checked using the following method.
① When the electrode tab and the electrode lead are not welded to each other at all, whereby the state in which the electrode tab and the electrode lead are separated from each other can be checked with the naked eye, this is regarded as failure.
② When a portion of the electrode tab and a portion of the electrode lead are welded to each other, whereby it is difficult to check poor welding therebetween with the naked eye, and the electrode tab and the electrode lead are separated from each other after hitting is performed once to 10 times using a hitting member made of an elastic material, this may be regarded as failure.
③ When a portion of the electrode tab and a portion of the electrode lead are welded to each other, whereby it is difficult to check poor welding therebetween with the naked eye, resistance of a weld portion is measured to determine whether welding fails. When the electrode tab and the electrode lead are successfully welded under the same welding conditions and the ratio of the measured resistance value to resistance value at the weld portion thereof is 10% or more, this may be regarded as failure.

**[Table 1]**

| Results of evaluation of welding performance | |
|---|---|
| Classification | Number of welding failures (times) |
| Example 1 | 0 |
| Example 2 | 0 |
| Example 3 | 0 |
| Comparative Example 1 | 7 |
| Comparative Example 2 | 2 |

Although the specific details of the present invention have been described in detail, those skilled in the art will appreciate that the detailed description thereof discloses only preferred embodiments of the present invention and thus does not limit the scope of the present invention. Accordingly, those skilled in the art will appreciate that various changes and modifications are possible, without departing from the category and the technical idea of the present invention, and it will be obvious that such changes and modifications fall within the scope of the appended claims.

### (Description of Reference Symbols)

10, 110, 210, 310: Electrodes
11, 111, 211, 311: Electrode active materials
12, 112, 212, 312: Electrode current collectors
20, 120, 220, 320: Electrode tabs
121: First side surface, 122: Second side surface, 123: Third side surface
30, 130, 230, 330: Electrode leads
40, 140, 240, 340: Protective films
50, 150, 250, 350: Insulating layers
w: Junction

## Claims

1. An electrode (10) comprising:
an electrode current collector (112) coated with an electrode active material (111);
an electrode tab (120) protruding from the electrode current collector (112);
an insulating layer (150); and
an electrode lead (130),
wherein the electrode tab (120) includes:
- a pair of first side surfaces (121) opposite each other, corresponding to width direction (X-axis direction) surfaces,
- a pair of second side surfaces (122) opposite each other, corresponding to thickness direction (Y-axis direction) surfaces, and
- a third side surface (123) opposite the electrode current collector (112),
**characterized in that**
the insulating layer (150) is coated on one surface of the pair of first side surface (121), and
the electrode lead (130) is welded on the other surface of the pair of first side surface (121), said other surface being free of insulating layer coated thereon.

2. The electrode according to claim 1, wherein the electrode tab (120) is a non-coated portion comprising no electrode active material layer.

3. The electrode according to claim 2, wherein the insulating layer (150) is formed, by coating, on a portion or an entirety of a total length of the electrode tab (120) in a protruding direction of the electrode tab (120).

4. The electrode according to claim 2, wherein the insulating layer (150) is formed by coating so as to have a width equal to a width of the electrode tab (120) perpendicular to a protruding direction of the electrode tab (120).

5. The electrode according to claim 1, wherein the electrode tab (120) comprises a portion of an electrode active material layer.

6. The electrode (10) according to claim 5, wherein the insulating layer (150) comprises a portion or an entirety of the electrode active material, and is formed, by coating, on a portion or an entirety of a total length of the electrode tab (120) in a protruding direction of the electrode tab (120).

7. The electrode (10) according to claim 5, wherein the insulating layer (150) is formed by coating so as to have a width equal to a width of the electrode tab (120) perpendicular to a protruding direction of the electrode tab (120).

8. The electrode (10) according to any one of claims 1 to 7, wherein the insulating layer (150) is further coated on the pair of second side surfaces (122) and the third side surface (123) of the electrode tab (120).

9. A secondary battery comprising the electrode (10) according to any one of claims 1 to 8.

10. The secondary battery according to claim 9, wherein the secondary battery is a cylindrical, prismatic, or pouch-shaped secondary battery.

11. A method of manufacturing the electrode according to any one of claims 1 to 7, the method comprising:
a first step of forming, by coating, the insulating layer (150) on one of a pair of first side surfaces (121) of the electrode tab (120);
a second step of welding an electrode lead (130) on the other surface of the pair of first side surfaces (121) of the electrode tab (120), said other surface being free of insulating layer coated thereon ; and
wherein, in the first step, the insulating layer (150) is formed, by coating, on an portion or an entirety of the first side surface of the electrode tab.

12. A method of manufacturing the electrode according to claim 8 comprising:
- the first step and the second step of the method of claim 11, and
- a step of forming, by coating, the insulating layer (150) on the pair of second side surfaces (122) and the third side surface (123) of the electrode tab (120) in the first step.

## Patentansprüche

1. Elektrode (10), umfassend:
einen Elektrodenstromsammler (112), welcher mit einem Elektrodenaktivmaterial (111) beschichtet ist;
einen Elektrodenstreifen (120), welcher von dem Elektrodenstromsammler (112) hervorsteht;
eine Isolationsschicht (150); und
eine Elektrodenleitung (130),
wobei der Elektrodenstreifen (120) umfasst:
- ein Paar erster Seitenflächen (121), welche zueinander entgegengesetzt sind, welche Flächen in einer Breitenrichtung (X-Achsen-Richtung) entsprechen,
- ein Paar zweiter Seitenflächen (122), welche zueinander entgegengesetzt sind, welche Flächen in einer Dickenrichtung (Y-Achsen-Richtung) entsprechen, und
- eine dritte Seitenfläche (123), welche zum Elektrodenstromsammler (112) entgegengesetzt ist,
**dadurch gekennzeichnet, dass**
die Isolationsschicht (150) an einer Fläche des Paars erster Seitenflächen (121) beschichtet ist, und
die Elektrodenleitung (130) an die andere Fläche des Paars erster Seitenflächen (121) geschweißt ist, wobei die andere Fläche frei von einer daran beschichteten Isolationsschicht ist.

2. Elektrode nach Anspruch 1, wobei der Elektrodenstreifen (120) ein nicht beschichteter Abschnitt ist, welcher keine Elektrodenaktivmaterialschicht umfasst.

3. Elektrode nach Anspruch 2, wobei die Isolationsschicht (150) durch Beschichten an einem Abschnitt oder an einer Gesamtheit einer gesamten Länge des Elektrodenstreifens (120) in einer hervorstehenden Richtung des Elektrodenstreifens (120) gebildet ist.

4. Elektrode nach Anspruch 2, wobei die Isolationsschicht (150) durch Beschichten derart gebildet ist, dass sie eine Breite aufweist, welche gleich einer Breite des Elektrodenstreifens (120) senkrecht zu einer hervorstehenden Richtung des Elektrodenstreifens (120) ist.

5. Elektrode nach Anspruch 1, wobei der Elektrodenstreifen (120) einen Abschnitt einer Elektrodenaktivmaterialschicht umfasst.

6. Elektrode (10) nach Anspruch 5, wobei die Isolationsschicht (150) einen Abschnitt oder eine Gesamtheit des Elektrodenaktivmaterials umfasst und durch Beschichten an einem Abschnitt oder an einer Gesamtheit einer gesamten Länge des Elektrodenstreifens (120) in einer hervorstehenden Richtung des Elektrodenstreifens (120) gebildet ist.

7. Elektrode (10) nach Anspruch 5, wobei die Isolationsschicht (150) durch Beschichten derart gebildet ist, dass sie eine Breite aufweist, welche gleich wie eine Breite des Elektrodenstreifens (120) senkrecht zu einer hervorstehenden Richtung des Elektrodenstreifens (120) ist.

8. Elektrode (10) nach einem der Ansprüche 1 bis 7, wobei die Isolationsschicht (150) ferner an dem Paar zweiter Seitenflächen (122) und der dritten Seitenfläche (123) des Elektrodenstreifens (120) beschichtet ist.

9. Sekundärbatterie umfassend die Elektrode (10) nach einem der Ansprüche 1 bis 8.

10. Sekundärbatterie nach Anspruch 9, wobei die Sekundärbatterie eine zylindrische, prismatische oder beutelförmige Sekundärbatterie ist.

11. Verfahren zum Herstellen der Elektrode nach einem der Ansprüche 1 bis 7, wobei das Verfahren umfasst:
einen ersten Schritt eines Bildens der Isolationsschicht (150) durch Beschichten an einer von einem Paar erster Seitenflächen (121) des Elektrodenstreifens (120);
einen zweiten Schritt eines Schweißens einer Elektrodenleitung (130) an die andere Fläche des Paars erster Seitenflächen (121) des Elektrodenstreifens (120), wobei die andere Fläche frei von einer daran beschichteten Isolationsschicht ist; und
wobei, in dem ersten Schritt, die Isolationsschicht (150) durch Beschichten an einem Abschnitt oder an einer Gesamtheit der ersten Seitenfläche des Elektrodenstreifens gebildet wird.

12. Verfahren zum Herstellen der Elektrode nach Anspruch 8, umfassend:
- den ersten Schritt und den zweiten Schritt des Verfahrens nach Anspruch 11, und
- einen Schritt eines Bildens der Isolationsschicht (150) durch Beschichten an dem Paar zweiter Seitenflächen (122) und der dritten Seitenfläche (123) des Elektrodenstreifens (120) in dem ersten Schritt.

## Revendications

1. Électrode (10) comprenant :
un collecteur de courant d'électrode (112) enduit d'un matériau actif d'électrode (111) ;
une patte d'électrode (120) faisant saillie à partir du collecteur de courant d'électrode (112) ;
une couche isolante (150) ; et
un fil d'électrode (130),
dans laquelle la patte d'électrode (120) comporte :
- une paire de premières surfaces latérales (121) opposées l'une à l'autre, correspondant à des surfaces de direction de largeur (direction d'axe X),
- une paire de deuxièmes surfaces latérales (122) opposées l'une à l'autre, correspondant à des surfaces de direction d'épaisseur (direction d'axe Y), et
- une troisième surface latérale (123) opposée au collecteur de courant d'électrode (112),
**caractérisée en ce que**
la couche isolante (150) est enduite sur une surface de la paire de premières surfaces latérales (121), et
le fil d'électrode (130) est soudé sur l'autre surface de la paire de premières surfaces latérales (121), ladite autre surface étant dépourvue de couche isolante enduite sur celle-ci.

2. Électrode selon la revendication 1, dans laquelle la patte d'électrode (120) est une partie non enduite ne comprenant pas de couche de matériau actif d'électrode.

3. Électrode selon la revendication 2, dans laquelle la couche isolante (150) est formée, par enduction, sur une partie ou une totalité d'une longueur totale de la patte d'électrode (120) dans une direction de saillie de la patte d'électrode (120).

4. Électrode selon la revendication 2, dans laquelle la couche isolante (150) est formée par enduction de façon à avoir une largeur égale à une largeur de la patte d'électrode (120) perpendiculaire à une direction de saillie de la patte d'électrode (120).

5. Électrode selon la revendication 1, dans laquelle la patte d'électrode (120) comprend une partie d'une couche de matériau actif d'électrode.

6. Électrode (10) selon la revendication 5, dans laquelle la couche isolante (150) comprend une partie ou une totalité du matériau actif d'électrode, et est formée, par enduction, sur une partie ou une totalité d'une longueur totale de la patte d'électrode (120) dans une direction de saillie de la patte d'électrode (120).

7. Électrode (10) selon la revendication 5, dans laquelle la couche isolante (150) est formée par enduction de façon à avoir une largeur égale à une largeur de la patte d'électrode (120) perpendiculaire à une direction de saillie de la patte d'électrode (120).

8. Électrode (10) selon l'une quelconque des revendications 1 à 7, dans laquelle la couche isolante (150) est en outre enduite sur la paire de deuxièmes surfaces latérales (122) et la troisième surface latérale (123) de la patte d'électrode (120).

9. Batterie secondaire comprenant l'électrode (10) selon l'une quelconque des revendications 1 à 8.

10. Batterie secondaire selon la revendication 9, dans laquelle la batterie secondaire est une batterie secondaire cylindrique, prismatique ou en forme de poche.

11. Procédé de fabrication de l'électrode selon l'une quelconque des revendications 1 à 7, le procédé comprenant :
une première étape consistant en la formation, par enduction, de la couche isolante (150) sur l'une d'une paire de premières surfaces latérales (121) de la patte d'électrode (120) ;
une deuxième étape consistant en la soudure d'un fil d'électrode (130) sur l'autre surface de la paire de premières surfaces latérales (121) de la patte d'électrode (120), ladite autre surface étant dépourvue de couche isolante enduite sur celle-ci ; et
dans lequel, dans la première étape, la couche isolante (150) est formée, par enduction, sur une partie ou une totalité de la première surface latérale de la patte d'électrode.

12. Procédé de fabrication de l'électrode selon la revendication 8 comprenant :
- la première étape et la deuxième étape du procédé selon la revendication 11, et
- une étape consistant en la formation, par enduction, la couche isolante (150) sur la paire de deuxièmes surfaces latérales (122) et la troisième surface latérale (123) de la patte d'électrode (120) dans la première étape.
